# EUROPEAN PATENT APPLICATION

(11) **EP 4 542 966 A1**
(43) Date of publication of application: **23.04.2025**
(21) Application number: 23838436.6
(22) Date of filing: 15.03.2023
(51) Int. Cl.: H04L 65/60

(54) **DATA TRANSMISSION METHOD, APPARATUS AND SYSTEM**

(30) Priority: 15.07.2022 CN 202210832242; 18.11.2022 CN 202211446426
(71) Applicant: Huawei Cloud Computing Technologies Co., Ltd., Guiyang, Guizhou 550025 (CN)
(72) Inventor: HUANG, Luzhen, Guiyang, Guizhou 550025 (CN); ZHANG, Guangyuan, Guiyang, Guizhou 550025 (CN); YANG, Changpeng, Guiyang, Guizhou 550025 (CN); ZHANG, Shen, Guiyang, Guizhou 550025 (CN)
(74) Representative: Goddar, Heinz J.
(86) International application number: PCT/CN2023/081496
(87) International publication number: WO 2024/011934

(57) **Abstract**

Embodiments of this application disclose a data transmission method and apparatus, to improve bandwidth utilization of a data transmission system. The method in embodiments of this application includes: obtaining quality of service QoS data of a unified data stream of one or more media services, where the unified data stream includes at least two types of the following data packets: an audio data packet, a video data packet, and a media signaling data packet; generating scheduling information based on the QoS data, where the scheduling information indicates a bandwidth for transmitting each type of data packet in the unified data stream and a path of the unified data stream; and transmitting the unified data stream based on the scheduling information.

## Description

This application claims priority to Chinese Patent Application No. 202210832242.1, filed with the China National Intellectual Property Administration on July 15, 2022 and entitled "DATA TRANSMISSION METHOD, APPARATUS, AND SYSTEM", which is incorporated herein by reference in its entirety.

This application claims priority to Chinese Patent Application No. 202211446426.0, filed with the China National Intellectual Property Administration on November 18, 2022 and entitled "DATA TRANSMISSION METHOD, APPARATUS, AND SYSTEM", which is incorporated herein by reference in its entirety.

### TECHNICAL FIELD

Embodiments of this application relate to the field of computers, and in particular, to a data transmission method, apparatus, and system.

### BACKGROUND

A media service scheduling module in a cloud service may perform macro resource allocation and traffic path selection, and the scheduling module selects a proper scheduling policy for media services, to ensure normal running of the media services and balance use of resources such as a network transmission bandwidth and a central processing unit of a node.

For the media service, traffic of video data accounts for a major proportion of total traffic and is also an important part that affects quality of experience (quality of experience, QoE) of a user. In a current data transmission system, different types of data are usually transmitted based on respective data transmission protocols. The data transmission system usually performs bandwidth allocation and transmission path scheduling only for video data transmission because video data consumes a high proportion of transmission bandwidths, while the data transmission system manages audio data and control signaling at a low bit rate by using a separate transmission protocol stack, and ensures transmission bandwidths of the audio data and the control signaling by reserving bandwidths.

Reserving bandwidths by the data transmission system to ensure the transmission bandwidths of the audio data and the control signaling causes a transmission bandwidth waste. In addition, for the media service, a manner in which each type of data stream needs to be managed by a separate transmission channel also increases processing load of the data transmission system. For different QoE requirements of the services, the data transmission system needs to adapt to a plurality of stream channels, and this is not conducive to expansion and unified maintenance.

### SUMMARY

Embodiments of this application provide a data transmission method, apparatus, and system, to improve utilization of a transmission bandwidth.

A first aspect of embodiments of this application provides a data transmission method. The method may be performed by a cloud-side device of a data transmission system, or may be performed by a component of the cloud-side device, for example, a processor, a chip, or a chip system of the cloud-side device, or may be implemented by a logical module or software that can implement all or some functions of the cloud-side device. The data transmission method provided in the first aspect includes: The cloud-side device obtains quality of service QoS data of a unified data stream of one or more media services, where the unified data stream includes at least two types of the following data packets: an audio data packet, a video data packet, and a media signaling data packet. The cloud-side device generates scheduling information based on the QoS data, where the scheduling information indicates a bandwidth for transmitting each type of data packet in the unified data stream and a path of the unified data stream. The cloud-side device transmits the unified data stream based on the scheduling information.

In this embodiment of this application, the data transmission system can transmit various types of data packets by using the unified data stream, generate the scheduling information based on the quality of service QoS data of the unified data stream, and flexibly adjust transmission bandwidths of the various types of data based on the scheduling information. In comparison with a current transmission manner in which a fixed bandwidth is reserved for data of a media signaling type, bandwidth utilization of the data transmission system is improved.

In a possible implementation, the QoS data includes real-time QoS data for data transmission between a terminal side and an edge side.

In this embodiment of this application, a scheduling system of the cloud-side device can obtain the real-time QoS data for the data transmission between the terminal side and the edge side, so that the scheduling system senses a network status between the terminal side and the edge side at a finer granularity and performs more refined scheduling, to further improve bandwidth utilization of the data transmission system.

In a possible implementation, the QoS data includes one or more of the following data: congestion control data, weak network resistance policy data, and traffic control data, the congestion control data includes a maximum estimated bandwidth, the weak network resistance policy data includes a retransmitted data packet proportion and a redundant data packet proportion of the same data stream, and the traffic control data includes a bit rate feature and an effective bit rate proportion of the unified data stream.

In this embodiment of this application, the scheduling system of the cloud-side device can obtain a plurality of types of QoS data of the terminal side, the edge side, and a cloud side, so that more refined scheduling is performed, to improve bandwidth utilization of the data transmission system. In addition, the scheduling system of the cloud-side device obtains the QoS data of the terminal side, the edge side, and the cloud side in real time, so that real-time performance of the scheduling information is improved.

In a possible implementation, each data packet in the unified data stream carries a label, the label indicates stream attribute information of each data packet in the unified data stream, and the stream attribute information includes priority information, type information, and transmission attribute information of the different types of data packets.

In this embodiment of this application, each data packet in the unified data stream carries the label indicating the stream attribute information, so that the data transmission system can collect QoS data and perform traffic control based on the label, to improve implementability of the solution.

In a possible implementation, in a process in which the cloud-side device transmits the unified data stream based on the scheduling information, the cloud-side device adjusts a transmission bandwidth of each type of data in the unified data stream based on the scheduling information. Specifically, a universal transport module of the cloud-side device can schedule information to flexibly adjust transmission bandwidths of video data, audio data, and media signaling data.

In this embodiment of this application, the cloud-side device can flexibly adjust the transmission bandwidth of each type of data in the unified data stream based on the scheduling information, to improve overall bandwidth utilization of the data transmission system.

In a possible implementation, in a process of transmitting the unified data stream based on the scheduling information, when the QoS data indicates that a predicted available bandwidth of the unified data stream on a first link is less than a first threshold, a transmission path of the unified data stream is adjusted to a second link based on the scheduling information, where the first link and the second link are different transmission links.

In this embodiment of this application, the cloud-side device can sense an available bandwidth of a link based on the QoS data, so that the transmission path of the unified data stream is adjusted, to improve quality of experience of a user.

In a possible implementation, the cloud-side device may generate differentiated scheduling information for different media services. Specifically, the cloud-side device analyzes reported QoS data to obtain scheduling requirements of the different media services, and the cloud-side device generates different scheduling information based on the scheduling requirements of the different media services.

In this embodiment of this application, the cloud-side device may generate the differentiated scheduling information for the different media services, to improve scheduling flexibility and fine granularity of the data transmission system.

In a possible implementation, in a process of transmitting the unified data stream based on the scheduling information, when the QoS data indicates that predicted bandwidths of the different media services are different, transmission paths of unified data streams corresponding to the different media services are adjusted based on the scheduling information.

In this embodiment of this application, the cloud-side device can obtain the predicted bandwidths of the different media services based on the QoS data, so that bandwidths and transmission paths of the services are dynamically planned, to ensure quality of experience of a user of the different media services.

In a possible implementation, the media service includes one or more of the following: a real time communication service, a cloud desktop service, a cloud desktop design service, and a cloud gaming service.

The data transmission method provided in this embodiment of this application may be applied to data transmission scenarios of a plurality of media services, to extend application scenarios of the data transmission method.

In a possible implementation, the different media services include a first service and a second service. In a process of transmitting the unified data stream based on the scheduling information, when the QoS data indicates that a predicted bandwidth of a unified data stream corresponding to the first service on a third link is greater than a second threshold, a transmission path of a unified data stream corresponding to the second service is adjusted from the third link to a fourth link based on the scheduling information, where the third link and the fourth link are different transmission links.

In this embodiment of this application, the cloud-side device can obtain, based on the QoS data, that the predicted bandwidth of the unified data stream corresponding to the first service on the third link exceeds the second threshold, so that the second service originally on the third link is adjusted to the fourth link for transmission, to ensure quality of experience of a user of the first service.

In a possible implementation, the first service includes a cloud desktop service, and the second service includes a real time communication service.

In this embodiment of this application, a transmission path of a real time communication service that uses less bandwidth is adjusted, so that a transmission bandwidth of the cloud desktop service is ensured, to improve bandwidth utilization of the data transmission system.

In a possible implementation, the cloud-side device may generate long-term scheduling information based on the QoS data. Specifically, the cloud-side device performs analysis based on current QoS data and historical QoS data, plans, for each type of media service, a resource quantity that meets a transmission requirement of the type of media service, may predict a required resource quantity in a next periodicity based on the historical QoS data, and performs prediction based on the required resource quantity in the next periodicity to obtain a required resource quantity, so as to generate scheduling information.

In this embodiment of this application, the cloud-side device can predict the required resource quantity in the next periodicity based on the historical QoS data, so that the scheduling information in the next periodicity is generated, to improve bandwidth utilization of the data transmission system.

A second aspect of embodiments of this application provides a data transmission method. The method may be performed by a terminal-side device of a data transmission system, or may be performed by a component of the terminal-side device, for example, a processor, a chip, or a chip system of the terminal-side device, or may be implemented by a logical module or software that can implement all or some functions of the terminal-side device. The data transmission method provided in the second aspect includes: A terminal device receives different types of data streams from an application, where the different types of data streams include an audio stream, a video stream, and a media signaling stream. The terminal device performs unified processing on the different types of data streams based on stream attribute information to generate a unified data stream, where the stream attribute information includes priorities, types, and transmission attributes of the different types of data streams. The terminal device sends the unified data stream based on scheduling information, where the scheduling information indicates a bandwidth for transmitting each type of data packet in the unified data stream and a path of the unified data stream.

In this embodiment of this application, the terminal device can perform unified management on various types of data sent by an upper-layer application, generate the unified data stream, and flexibly adjust transmission bandwidths of the various types of data in the unified data stream based on the scheduling information. In comparison with a current transmission manner in which a fixed bandwidth is reserved for data of a media signaling type, bandwidth utilization of the data transmission system is improved.

In a possible implementation, each data packet in the unified data stream carries a label, and the label indicates stream attribute information of each data packet in the unified data stream.

In a possible implementation, the terminal-side device obtains quality of service QoS data of a unified data stream of one or more media services, where the QoS data is used for generating the scheduling information; and sends the QoS data to a cloud-side device through an application programming interface of a scheduling system.

In a possible implementation, the QoS data includes one or more of the following data: congestion control data, weak network resistance policy data, and traffic control data, the congestion control data includes a maximum estimated bandwidth, the weak network resistance policy data includes a retransmitted data packet proportion and a redundant data packet proportion of the same data stream, and the traffic control data includes a bit rate feature and an effective bit rate proportion of the unified data stream.

A third aspect of embodiments of this application provides a data transmission method, applied to a universal transport system. The universal transport system is deployed on a cloud-side device, an edge-side device, and a terminal-side device. The data transmission method provided in the third aspect includes: The cloud-side device obtains quality of service QoS data of a unified data stream of one or more media services, where the unified data stream includes at least two types of the following data packets: an audio data packet, a video data packet, and a media signaling data packet. The cloud-side device generates scheduling information based on the QoS data, where the scheduling information indicates a bandwidth for transmitting each type of data packet in the unified data stream and a path in the unified data stream. The cloud-side device separately sends the scheduling information to the edge-side device and the terminal-side device. The universal transport system transmits the unified data stream based on the scheduling information.

In this embodiment of this application, a data transmission system can transmit various types of data by using the unified data stream, generate the scheduling information based on the quality of service QoS data of the unified data stream, and flexibly adjust transmission bandwidths of the various types of data based on the scheduling information, so that bandwidth utilization of the data transmission system is improved.

In a possible implementation, the QoS data includes QoS data for data transmission between the terminal-side device and the edge-side device. The QoS data includes one or more of the following data: congestion control data, weak network resistance policy data, and traffic control data, the congestion control data includes a maximum estimated bandwidth, the weak network resistance policy data includes a retransmitted data packet proportion and a redundant data packet proportion of the same data stream, and the traffic control data includes a bit rate feature and an effective bit rate proportion of the unified data stream.

In a possible implementation, the terminal-side device receives different types of data streams from an application, where the different types of data streams include an audio stream, a video stream, and a media signaling stream. The terminal-side device performs unified processing on the different types of data streams based on stream attribute information to generate the unified data stream, where the stream attribute information includes priorities, types, and transmission attributes of the different types of data streams. The terminal-side device sends the unified data stream to the edge-side device based on the scheduling information.

In a possible implementation, each data packet in the unified data stream carries a label, and the label indicates stream attribute information of each data packet in the unified data stream.

In a possible implementation, in a process in which the universal transport system transmits the unified data stream based on the scheduling information, the universal transport system adjusts a transmission bandwidth of each type of data in the unified data stream based on the scheduling information.

In a possible implementation, in a process in which the universal transport system transmits the unified data stream based on the scheduling information, when the QoS data indicates that a predicted available bandwidth of the unified data stream on a first link is less than a first threshold, the edge-side device adjusts a transmission path of the unified data stream from a first path to a second link based on the scheduling information, where the first link and the second link are different transmission links.

In a possible implementation, in a process in which the universal transport system transmits the unified data stream based on the scheduling information, when the QoS data indicates that predicted bandwidths of different media services are different, transmission paths of unified data streams corresponding to the different media services are adjusted based on the scheduling information.

In a possible implementation, the different media services include a first service and a second service. In a process in which the universal transport system transmits the unified data stream based on the scheduling information, when the QoS data indicates that a predicted bandwidth of a unified data stream corresponding to the first service on a third link is greater than a second threshold, the edge-side device adjusts, based on the scheduling information, a transmission path of a unified data stream corresponding to the second service from the third link to a fourth link, where the third link and the fourth link are different data transmission links.

In a possible implementation, the first service includes a cloud desktop service, and the second service includes a real time communication service.

A fourth aspect of embodiments of this application provides a cloud-side data transmission apparatus, including a transceiver unit and a processing unit. The transceiver unit is configured to obtain quality of service QoS data of a unified data stream of one or more media services, where the unified data stream includes at least two types of the following data packets: an audio data packet, a video data packet, and a media signaling data packet. The processing unit is configured to generate scheduling information based on the QoS data, where the scheduling information indicates bandwidth planning for transmitting each type of data in the unified data stream and path planning in the unified data stream. The processing unit is further configured to transmit the unified data stream based on the scheduling information.

In a possible implementation, the QoS data includes QoS data for data transmission between a terminal side and an edge side. The QoS data includes one or more of the following data: congestion control data, weak network resistance policy data, and traffic control data, the congestion control data includes a maximum estimated bandwidth, the weak network resistance policy data includes a retransmitted data packet proportion and a redundant data packet proportion of the same data stream, and the traffic control data includes a bit rate feature and an effective bit rate proportion of the unified data stream.

In a possible implementation, each data packet in the unified data stream carries a label, the label indicates stream attribute information of each data packet in the unified data stream, and the stream attribute information includes priority information, type information, and transmission attribute information of the different types of data packets.

In a possible implementation, the processing unit is specifically configured to adjust a transmission bandwidth of each type of data in the unified data stream based on the scheduling information.

In a possible implementation, the processing unit is specifically configured to: when the QoS data indicates that a predicted available bandwidth of the unified data stream on a first link is less than a first threshold, adjust a transmission path of the unified data stream to a second link based on the scheduling information, where the first link and the second link are different transmission links.

In a possible implementation, the processing unit is specifically configured to: when the QoS data indicates that predicted bandwidths of different media services are different, adjust, based on the scheduling information, transmission paths of unified data streams corresponding to the different media services.

In a possible implementation, the media service includes one or more of the following: a real time communication service, a cloud desktop service, a cloud desktop design service, and a cloud gaming service.

In a possible implementation, the different media services include a first service and a second service. The processing unit is specifically configured to: when the QoS data indicates that a predicted bandwidth of a unified data stream corresponding to the first service on a third link is greater than a second threshold, adjust, based on the scheduling information, a transmission path of a unified data stream corresponding to the second service from the third link to a fourth link, where the third link and the fourth link are different transmission links.

In a possible implementation, the first service includes a cloud desktop service, and the second service includes a real time communication service.

A fifth aspect of embodiments of this application provides a terminal-side data transmission apparatus, including a transceiver unit and a processing unit. The transceiver unit is configured to receive different types of data streams from an application, where the different types of data streams include an audio stream, a video stream, and a media signaling stream. The processing unit is configured to perform unified processing on the different types of data streams based on stream attribute information to generate a unified data stream, where the stream attribute information includes priority information, type information, and transmission attribute information of the different types of data streams. The processing unit is further configured to send the unified data stream based on scheduling information, where the scheduling information indicates a bandwidth for transmitting each type of data packet in the unified data stream and a path of the unified data stream.

In a possible implementation, each data packet in the unified data stream carries a label, and the label indicates stream attribute information of each data packet in the unified data stream.

In a possible implementation, the transceiver unit is further configured to: obtain quality of service QoS data of a unified data stream of one or more media services, where the QoS data is used for generating the scheduling information. The processing unit is further configured to send the QoS data to a cloud-side device through an application programming interface of a scheduling system.

In a possible implementation, the QoS data includes one or more of the following data: congestion control data, weak network resistance policy data, and traffic control data, the congestion control data includes a maximum estimated bandwidth, the weak network resistance policy data includes a retransmitted data packet proportion and a redundant data packet proportion of the same data stream, and the traffic control data includes a bit rate feature and an effective bit rate proportion of the unified data stream.

A sixth aspect of embodiments of this application provides a data transmission system, including a cloud-side device, an edge-side device, and a terminal-side device. The cloud-side device is configured to obtain quality of service QoS data of a unified data stream of one or more media services, where the unified data stream includes at least two types of the following data packets: an audio data packet, a video data packet, and a media signaling data packet. The cloud-side device is further configured to generate scheduling information based on the QoS data, where the scheduling information indicates a bandwidth for transmitting each type of data in the unified data stream and a path of the unified data stream. The cloud-side device is further configured to separately send the scheduling information to the edge-side device and the terminal-side device. The data transmission system is configured to transmit the unified data stream based on the scheduling information.

In a possible implementation, the QoS data includes QoS data for data transmission between the terminal-side device and the edge-side device.

In a possible implementation, the QoS data includes one or more of the following data: congestion control data, weak network resistance policy data, and traffic control data, the congestion control data includes a maximum estimated bandwidth, the weak network resistance policy data includes a retransmitted data packet proportion and a redundant data packet proportion of the same data stream, and the traffic control data includes a bit rate feature and an effective bit rate proportion of the unified data stream.

In a possible implementation, the terminal-side device is configured to receive different types of data streams from an application, where the different types of data streams include an audio stream, a video stream, and a media signaling stream. The terminal-side device is configured to perform unified processing on the different types of data streams based on stream attribute information to generate the unified data stream, where the stream attribute information includes priorities, types, and transmission attributes of the different types of data streams. The terminal-side device is configured to send the unified data stream to the edge-side device based on the scheduling information.

In a possible implementation, each data packet in the unified data stream carries a label, and the label indicates stream attribute information of each data packet in the unified data stream.

In a possible implementation, the data transmission system is specifically configured to adjust a transmission bandwidth of each type of data in the unified data stream based on the scheduling information.

In a possible implementation, the data transmission system is specifically configured to: when the QoS data indicates that a predicted available bandwidth of the unified data stream on a first link is less than a first threshold, adjust a transmission path of the unified data stream from a first path to a second link based on the scheduling information, where the first link and the second link are different transmission links.

In a possible implementation, the data transmission system is specifically configured to: when the QoS data indicates that predicted bandwidths of different media services are different, adjust, based on the scheduling information, transmission paths of unified data streams corresponding to the different media services.

In a possible implementation, the media service includes one or more of the following: a real time communication service, a cloud desktop service, a cloud desktop design service, and a cloud gaming service.

In a possible implementation, the different media services include a first service and a second service. The data transmission system is specifically configured to: when the QoS data indicates that a predicted bandwidth of a unified data stream corresponding to the first service on a third link is greater than a second threshold, adjust, based on the scheduling information, a transmission path of a unified data stream corresponding to the second service from the third link to a fourth link, where the third link and the fourth link are different data transmission links.

In a possible implementation, the first service includes a cloud desktop service, and the second service includes a real time communication service.

A seventh aspect of embodiments of this application provides a network device, including a processor, where the processor is coupled to a memory, the processor is configured to store instructions, and when the instructions are executed by the processor, the network device is enabled to perform the method according to any one of the first aspect or the possible implementations of the first aspect, or the network device is enabled to perform the method according to any one of the second aspect or the possible implementations of the second aspect.

An eighth aspect of embodiments of this application provides a computer-readable storage medium, where the computer-readable storage medium stores instructions, and when the instructions are executed, a computer is enabled to perform the method according to any one of the first aspect or the possible implementations of the first aspect, or a computer is enabled to perform the method according to any one of the second aspect or the possible implementations of the second aspect.

A ninth aspect of embodiments of this application provides a computer program product, where the computer program product includes instructions, and when the instructions are executed, a computer is enabled to implement the method according to any one of the first aspect or the possible implementations of the first aspect, or a computer is enabled to implement the method according to any one of the second aspect or the possible implementations of the second aspect.

It may be understood that, for beneficial effects that can be achieved by any cloud-side data transmission apparatus, terminal-side data transmission apparatus, data transmission system, network device, computer-readable medium, computer program product, or the like provided above, reference may be made to beneficial effects in a corresponding method. Details are not described herein again.

### BRIEF DESCRIPTION OF DRAWINGS

FIG. 1a is a diagram of a system architecture of a data transmission system according to an embodiment of this application;
FIG. 1b is a diagram of a system architecture of a universal transport module according to an embodiment of this application;
FIG. 2 is a schematic flowchart of a data transmission method according to an embodiment of this application;
FIG. 3 is a diagram of a data transmission method for a unified data module on a terminal side according to an embodiment of this application;
FIG. 4 is a diagram of generating scheduling information according to an embodiment of this application;
FIG. 5 is a diagram of transmitting a unified data stream based on scheduling information according to an embodiment of this application;
FIG. 6 is another diagram of transmitting a unified data stream based on scheduling information according to an embodiment of this application;
FIG. 7 is another diagram of transmitting a unified data stream based on scheduling information according to an embodiment of this application;
FIG. 8 is a diagram of a structure of a data transmission apparatus according to an embodiment of this application;
FIG. 9 is a diagram of a structure of a network device according to an embodiment of this application; and
FIG. 10 is a diagram of a structure of a network device cluster according to an embodiment of this application.

### DESCRIPTION OF EMBODIMENTS

Embodiments of this application provide a data transmission method, apparatus, and system, to improve utilization of a transmission bandwidth.

In the specification, claims, and accompanying drawings of this application, the terms "first", "second", "third", "fourth", and the like (if any) are used for distinguishing between similar objects but are not necessarily used for indicating a particular order or sequence. It should be understood that the data termed in such a way are interchangeable in proper circumstances, so that embodiments described herein can be implemented in an order other than those illustrated or described herein. In addition, the terms "include" and "have" and any variants thereof are intended to cover non-exclusive inclusion. For example, a process, method, system, product, or device that includes a series of steps or units is not necessarily limited to those expressly listed steps or units, but may include other steps or units not expressly listed or inherent to such a process, method, product, or device.

In addition, in embodiments of this application, the terms "example" or "for example" are used for giving an example, an illustration, or a description. Any embodiment or design scheme described as an "example" or "for example" in embodiments of this application should not be explained as being more preferred or having more advantages than another embodiment or design scheme. Exactly, use of the terms "example", "for example", or the like is intended to present a related concept in a specific manner.

The data transmission method, apparatus, and system provided in embodiments of this application are described below with reference to the accompanying drawings.

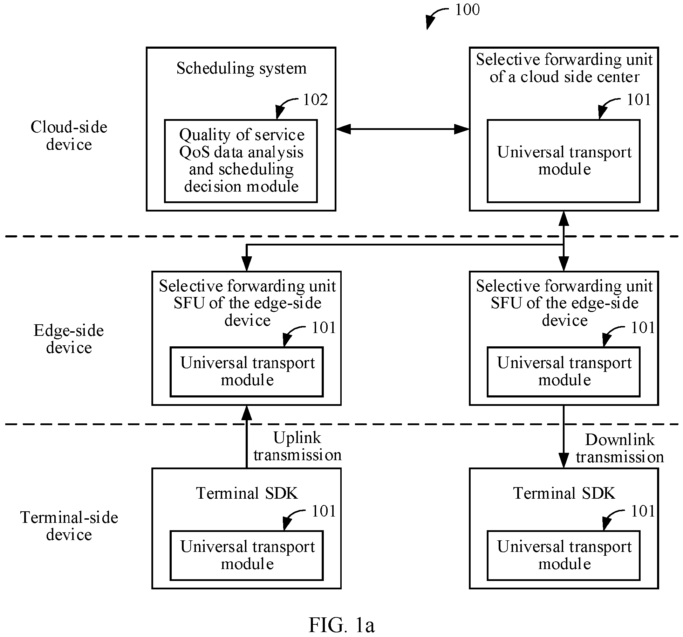

FIG. 1a is a diagram of a system architecture to which a data transmission method is applied according to an embodiment of this application. In the system architecture shown in FIG. 1a, a data transmission system 100 includes universal transport (universal transport) modules 101 and a quality of service (quality of service, QoS) data analysis and scheduling decision module 102. The universal transport module 101 is deployed on a terminal-side device, an edge-side device, and a cloud-side device, and the QoS data analysis and scheduling decision module 102 is deployed on the cloud-side device. Specific functions of modules in each data transmission system 100 are specifically described below.

The universal transport module 101 is configured to perform unified management on various types of data transmitted in the data transmission system 100, to generate and transmit a unified data stream. The universal transport module 101 is further configured to report real-time QoS data of a device on each side to the QoS data analysis and scheduling decision module 102. The various types of data include audio data, video data, and media signaling data, and the unified management includes: The universal transport module 101 allocates available bandwidths and plans traffic paths for the various types of data based on scheduling information.

In the system architecture shown in FIG. 1a, the universal transport module 101 may be deployed in a software development kit (software development kit, SDK) of the terminal-side device and selective forwarding units (selective forwarding units, SFUs) of the cloud-side device and the edge-side device. It may be understood that the universal transport module 101 has functions such as media application audio and video stream management, network bandwidth sensing and control, transmission traffic control, and data sending. Functions of the universal transport modules 101 deployed at different positions are different. For example, the universal transport module 101 deployed on a terminal side mainly performs classified management on a plurality of types of media data sent by a media application to generate a unified data stream, and the universal transport modules 101 deployed on an edge side and a cloud side mainly forwards the unified data stream and collects the QoS data.

The QoS data analysis and scheduling decision module 102 is configured to analyze the QoS data reported by the universal transport modules 101 in the terminal-side device, the edge-side device, and the cloud-side device, and generate the scheduling information. The scheduling information can indicate bandwidth allocation for each type of data in the unified data stream and transmission path planning in the unified data stream. The QoS data analysis and scheduling decision module 102 is deployed on the cloud-side device. The cloud-side device is, for example, a cloud management platform, and the cloud management platform is configured to manage one or more media services.

For example, the scheduling information indicates the data transmission system 100 to perform bandwidth expansion and computing capacity expansion on a content delivery network (content delivery network, CDN) node of the media service. For another example, the scheduling information indicates the data transmission system 100 to perform bandwidth reallocation on a fixed path of the service. For another example, the scheduling information indicates the data transmission system 100 to provide candidate paths for a service having a high real-time transmission requirement, to schedule an original service to perform path switching when a new service is accessed.

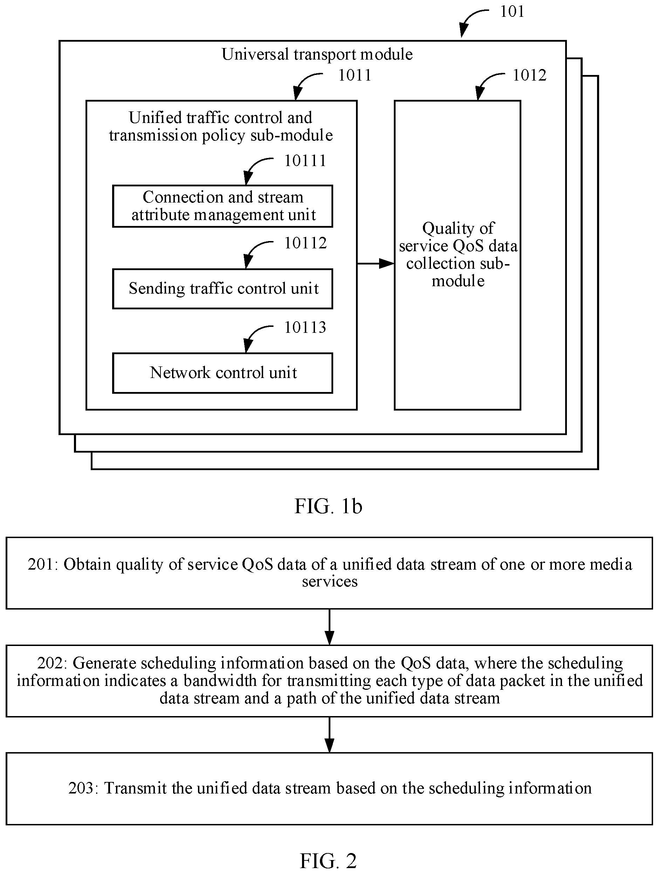

FIG. 1b is a diagram of a system architecture of a universal transport module according to an embodiment of this application. In the system architecture shown in FIG. 1b, the universal transport module 101 includes a unified traffic control and transmission policy sub-module 1011 and a QoS data collection sub-module 1012. The unified traffic control and transmission policy sub-module 1011 includes a connection and stream attribute management unit 10111, a sending traffic control unit 10112, and a network control unit 10113. Specific functions of sub-modules in each universal transport module 101 are specifically described below.

The unified traffic control and transmission policy sub-module 1011 is configured to generate a traffic control policy and a bandwidth allocation policy of a unified data stream based on scheduling information, and transmit the unified data stream based on the generated traffic control policy and bandwidth allocation policy. The connection and stream attribute management unit 10111 is configured to process a plurality of types of data sent by an application to generate the unified data stream. The sending traffic control unit 10112 is configured to perform traffic control on a sending queue of the unified data stream. The network control unit 10113 is configured to provide the sending traffic control unit 10112 with a traffic control parameter for performing traffic control. The traffic control parameter includes an available bandwidth and a recommended sending bit rate.

The QoS data collection sub-module 1012 is configured to collect QoS data from the sending traffic control unit 10112 and the network control unit 10113, and report the QoS data to the QoS data analysis and scheduling decision module 102 on a cloud side. The QoS data includes congestion control data, network sensing data, weak network resistance policy data, and traffic control data.

The data transmission system 100 in this embodiment of this application may be used in data transmission scenarios of a plurality of media services. The media services include a real time communication (real time communication, RTC) service, a cloud desktop office service, a cloud desktop design service, and a cloud gaming service. The data transmission scenario is, for example, a scenario in which dynamic path planning and adjustment are performed when a packet loss occurs on a data link, a scenario in which unified planning and scheduling are performed for transmission QoS indicators when a plurality of media services work together, and a scenario in which a plurality of candidate scheduling paths are provided in a cloud gaming service when a plurality of players use a same server.

FIG. 2 is a schematic flowchart of a data transmission method according to an embodiment of this application. In an example shown in FIG. 2, the data transmission method includes the following steps.

201: Obtain quality of service QoS data of a unified data stream of one or more media services, where the unified data stream includes at least two types of the following data packets: a video data packet, an audio data packet, and a media signaling data packet.

A data transmission system obtains the quality of service QoS data of the unified data stream of the one or more media services, where the unified data stream includes at least two types of the following data packets: a video data packet, an audio data packet, and a media signaling data packet. The QoS data includes QoS data reported by universal transport modules deployed on a terminal side, an edge side, and a cloud side. Specifically, a QoS data analysis and decision module on the cloud side receives the QoS data reported by the universal transport module on each side.

In this embodiment of this application, the QoS data includes one or more of the following data: congestion control data, network sensing data, weak network resistance policy data, and traffic control data. The congestion control data is, for example, a maximum estimated bandwidth, a congestion position, attribute information, and data of a network status change sensed through congestion control. The network status is, for example, overloaded, underloaded, or normal. The network sensing data is, for example, whether a current network bandwidth is limited, to be specific, whether an available bandwidth is less than a bandwidth required by the media service, a packet loss rate of a period of time, an average transmission delay of a period of time, and whether sending is in an application limitation state. The application limitation state means that an actual sending bandwidth is less than the available bandwidth. The weak network resistance policy data includes, for example, a retransmitted data packet proportion, a redundant data packet proportion, and a success rate of sending retransmitted data. The traffic control data is, for example, a bit rate feature, an effective bit rate proportion, and a ratio of a current bit rate to a historical maximum sending bit rate. The bit rate feature is, for example, burst, stable, and progressive.

Before the data transmission system obtains the quality of service QoS data of the unified data stream of the one or more media services, the universal transport module deployed on the terminal side in the data transmission system generates the unified data stream. Detailed descriptions are provided below.

The universal transport module on the terminal side receives different types of data streams from an application, where the different types of data streams include audio data, video data, and media signaling data. The universal transport module on the terminal side performs unified processing on the different types of data based on stream attribute information to generate the unified data stream. The stream attribute information includes priorities, types, and transmission attributes of the different types of data streams, where the transmission attributes are, for example, whether retransmission is needed.

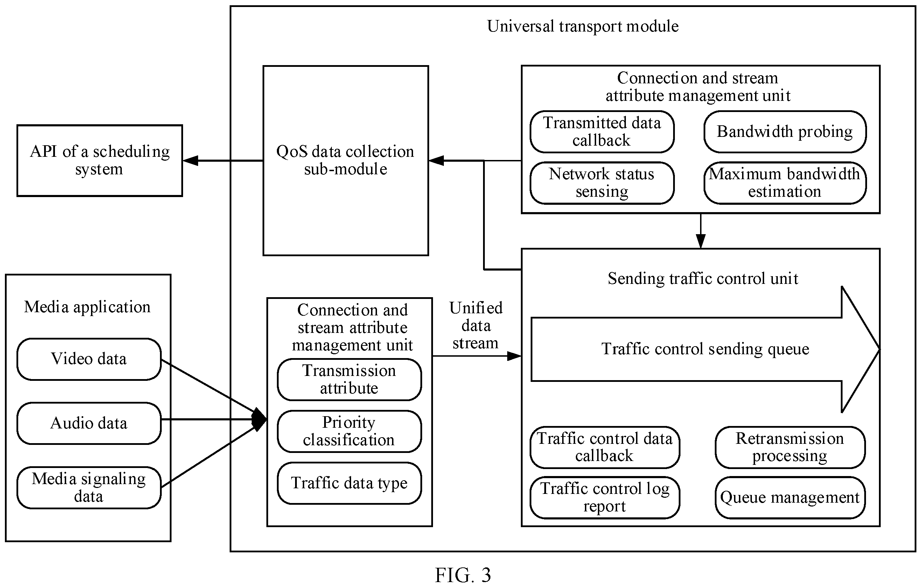

FIG. 3 is a diagram of a universal transport module deployed on a terminal side according to an embodiment of this application. In an example shown in FIG. 3, the universal transport module on the terminal side receives audio data, video data, and media signaling data that are sent by a media application, and a connection and stream attribute management unit generates a unified data stream based on stream attribute information of different types of data. Each data packet in the unified data stream carries a label, and the label indicates stream attribute information of each data packet in the unified data stream.

In the example shown in FIG. 3, after the connection and stream attribute management unit generates the unified data stream, the unified data stream enters a traffic control sending queue, and the universal transport module on the terminal side manages the traffic control sending queue by using a traffic control sending unit, and performs sending traffic control on the data packet in the unified data stream according to a traffic control rule. A control parameter in the traffic control rule includes a control parameter such as a sending bit rate and an available bandwidth.

In the example shown in FIG. 3, in a process in which the traffic control sending unit manages the traffic control sending queue, the control parameter in the traffic control rule is determined based on a network control unit. The network control unit generates a control parameter such as the available bandwidth and a recommended sending bit rate in real time based on a congestion control algorithm, a bandwidth prediction algorithm, and a network status sensing algorithm, and feeds back the control parameter to the traffic control sending unit. Optionally, the network control unit can further generate a parameter such as a recommended coding bit rate in real time, and feed back the parameter such as the recommended coding bit rate to the media application on the terminal side.

In the example shown in FIG. 3, a QoS data collection sub-module of the universal transport module on the terminal side can obtain QoS data from the network control unit and the traffic control sending unit, and report the QoS data to a QoS data analysis and scheduling decision module on a cloud side through an application programming interface API of a scheduling system. QoS data obtained by the QoS data collection sub-module from the network control unit includes congestion control data and network sensing data, and QoS data obtained from the traffic control sending unit includes weak network resistance policy data and traffic control data.

It may be understood that, in addition to a universal data transmission module deployed on the terminal side, the QoS data collection sub-modules of the universal transport modules deployed on the edge side and the cloud side can also report the collected QoS data to the QoS data analysis and scheduling decision module on the cloud side through the API of the scheduling system, so that the QoS data analysis and scheduling decision module can obtain, in real time, the QoS data of the unified data stream that is transmitted on each side.

202: Generate scheduling information based on the QoS data, where the scheduling information indicates bandwidth planning for transmitting each type of data in the unified data stream and path planning in the unified data stream.

The QoS data analysis and scheduling decision module generates the scheduling information based on the QoS data, where the scheduling information indicates the bandwidth planning for transmitting each type of data in the unified data stream and path planning of the unified data stream. Specifically, after the universal transport module on each side reports the QoS data to the QoS data analysis and scheduling decision module, the QoS data analysis and scheduling decision module processes and analyzes the QoS data reported by each side to obtain overall scheduling information, and sends the scheduling information to the universal transport module on each side.

In a possible implementation, the QoS data analysis and scheduling decision module generates scheduling information at a fine granularity by using the QoS data reported by each side. For example, the QoS data analysis and scheduling decision module analyzes the reported congestion control data, to learn that congestion occurs on a transmission path of the unified data stream between a terminal-side device and an edge-side device. The QoS data analysis and scheduling decision module generates the scheduling information, and the scheduling information indicates to adjust the transmission path of the unified data stream between the terminal-side device and the edge-side device.

In a possible implementation, the QoS data analysis and scheduling decision module may generate differentiated scheduling information for different media services. For example, the QoS data analysis and scheduling decision module analyzes the reported traffic control data and weak network resistance policy data to obtain scheduling requirements of the different media services, and the QoS data analysis and scheduling decision module generates different scheduling information for the scheduling requirements of the different media services.

In a possible implementation, the QoS data analysis and scheduling decision module may generate long-term scheduling information based on the QoS data. For example, the QoS data analysis and scheduling decision module performs analysis based on current QoS data and historical QoS data, plans, for each type of media service, a resource quantity that meets a transmission requirement of the type of media service, may predict a required resource quantity in a next periodicity based on historical data, and generates the scheduling information based on a required resource quantity of a periodicity.

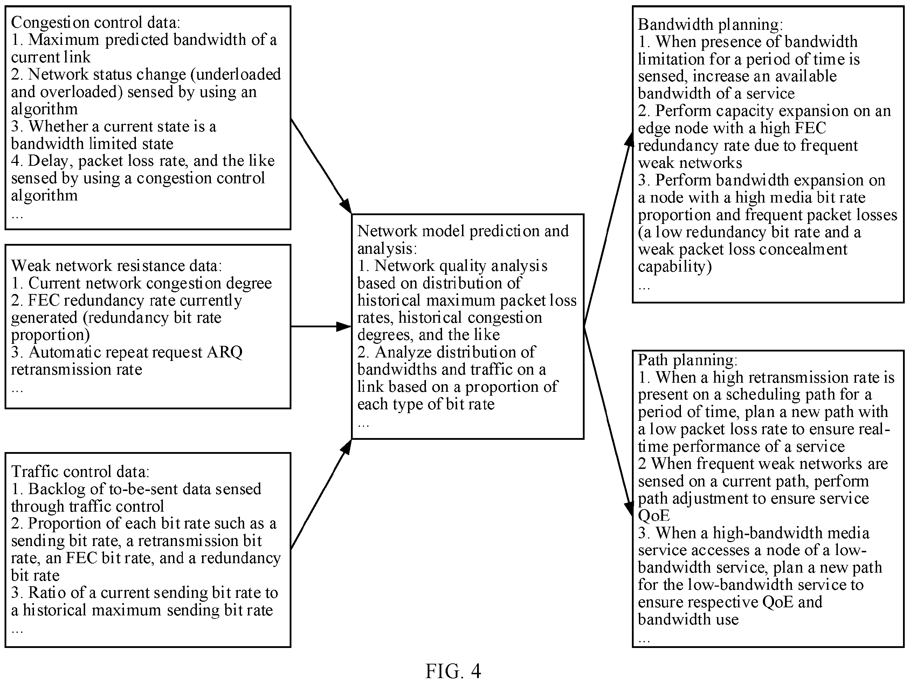

FIG. 4 is a diagram of generating scheduling information according to an embodiment of this application. In an example shown in FIG. 4, a QoS data analysis and scheduling decision module performs predictive analysis on a plurality of types of fine-grained QoS data to obtain scheduling information, and sends the scheduling information to a universal transport module on each side.

In the example shown in FIG. 4, the QoS data includes congestion control data, weak network resistance policy data, and traffic control data. The congestion control data includes a maximum predicted bandwidth of a current link, a network status change sensed by using an algorithm, whether a current state is a bandwidth limited state, a delay and a packet loss rate sensed by using a congestion control algorithm, and the like. The weak network resistance policy data includes a current network congestion degree, a forward error correction (forward error correction, FEC) redundancy rate currently generated, and an automatic repeat request (automatic repeat request, ARQ) retransmission rate. The traffic control data includes a backlog of to-be-sent data, a proportion of each bit rate such as a sending bit rate, a retransmission bit rate, an FEC bit rate, and a redundancy bit rate, and a ratio of a current sending bit rate to a historical maximum sending bit rate that are sensed through traffic control.

In the example shown in FIG. 4, the QoS data analysis and scheduling decision module analyzes and predicts the QoS data to obtain the scheduling information. For example, the QoS data analysis and scheduling decision module predicts network quality based on distribution of historical maximum packet loss rates, historical congestion degrees, and the like. The QoS data analysis and scheduling decision module analyzes distribution of bandwidths and traffic on a link based on the proportion of each type of bit rate.

In the example shown in FIG. 4, a data transmission system performs bandwidth planning and path planning on a unified data stream based on the scheduling information. The bandwidth planning is, for example, as follows: when presence of bandwidth limitation for a period of time is sensed, increasing an available bandwidth of a service; performing capacity expansion on an edge node with a high FEC redundancy rate due to frequent weak networks; or performing bandwidth expansion on a node with a high media bit rate proportion and frequent packet losses (a low redundancy bit rate and a weak packet loss concealment capability). The path planning is, for example, as follows: When a high retransmission rate is present on a scheduling path for a period of time, the data transmission system plans a new path with a low packet loss rate; when frequent weak networks are sensed on a current path, the data transmission system performs path adjustment on the current path; or when a high-bandwidth media service accesses a node of a low-bandwidth service, the data transmission system plans a new path for the low-bandwidth service.

203: Transmit the unified data stream based on the scheduling information.

The data transmission system transmits the unified data stream based on the scheduling information. Specifically, the data transmission system performs bandwidth allocation and path adjustment on the unified data stream based on the scheduling information. Detailed descriptions are provided below.

In a possible implementation, the data transmission system adjusts a transmission bandwidth of each type of data in the unified data stream based on the scheduling information.

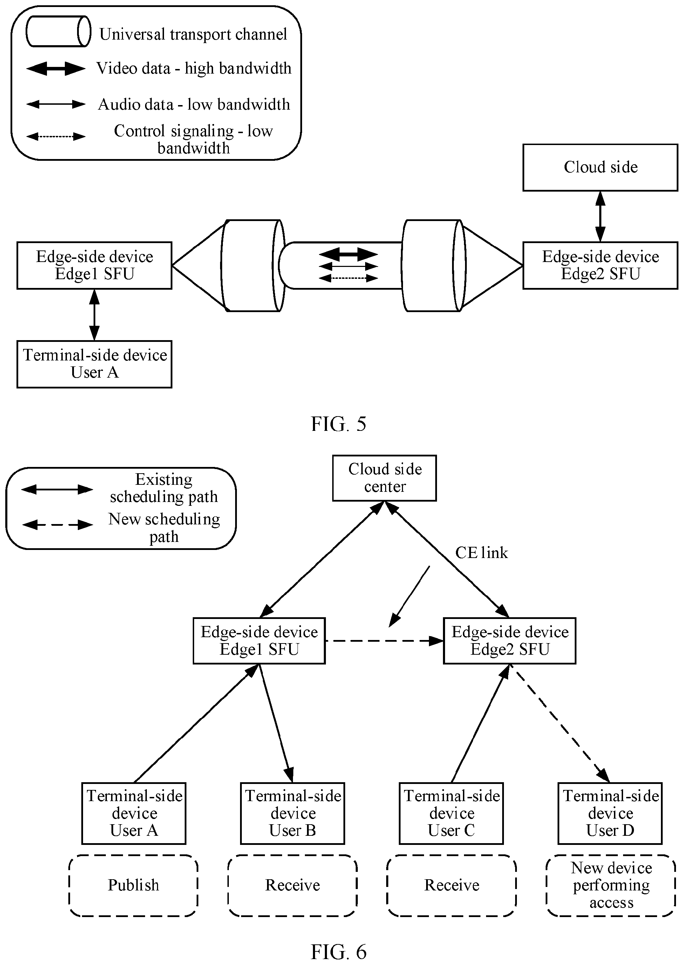

FIG. 5 is a diagram of data transmission in a cloud desktop scenario according to an embodiment of this application. In an example shown in FIG. 5, a cloud side transmits, by using a selective forwarding unit SFU of an edge side Edge2, a unified data stream to an edge side Edge1 corresponding to User A on a terminal side, an SFU of the edge side Edge1 forwards the unified data stream to User A on the terminal side, and an SDK application layer of User A of the terminal side decodes the received unified data stream, so that a user obtains a video and audio of a cloud desktop. User A on the terminal side may alternatively process media control signaling inputted by the user into a unified data stream, and send the unified data stream to an uplink cloud side.

In the example shown in FIG. 5, for a cloud desktop service, a data transmission system needs to ensure that a transmission delay from performing an input from the terminal side to a cloud for processing and then to image backhaul is within 200 ms, and also needs to separately ensure a media control signaling stream transmitted by a user in an uplink. Otherwise, when a control operation on the terminal side does not take effect or is delayed, quality of experience QoE of the user is reduced.

In the example shown in FIG. 5, a universal transport module of the data transmission system performs unified priority management and planning on different types of data such as audio, a video, and media control signaling. The data transmission system may calculate and plan a unified maximum bandwidth requirement based on a quality of service level SLA requirement of an entire service, and then perform dynamic bandwidth allocation on the different types of data in the data transmission system, to ensure orderly and priority-based transmission of the types of data. For example, the universal transport module dynamically adjusts available bandwidths for low-priority video data, medium-priority audio data, and high-priority media signaling data.

In addition, the universal transport module has a unified weak network resistance capability for data of each priority, so that quality of experience of a user upon presence of a weak network is improved. For example, the universal transport module has a unified weak network resistance capability for video data with a high bandwidth, and audio data and media signaling data that are with a low bandwidth.

In a possible implementation, when the QoS data indicates that a predicted available bandwidth of the unified data stream on a first link is less than a first threshold, the data transmission system adjusts a transmission path of the unified data stream from the first link to a second link based on the scheduling information, where the first link and the second link are different transmission links.

FIG. 6 is a diagram of performing path planning by a data transmission system based on scheduling information according to an embodiment of this application. In an example shown in FIG. 6, a data transmission scenario is a real time communication RTC service scenario, a plurality of terminal-side devices access an edge-side device in different regions, and each terminal-side device generates uplink and downlink traffic.

In the example shown in FIG. 6, a universal transport module reports transmission performance of a link CE to a scheduling system, and the scheduling system senses, based on QoS data, that a predicted available bandwidth of the link CE between a central cloud-side device and the edge-side device is less than 10 Mbps, in other words, senses that a weak network occurs and the predicted available bandwidth of the link is less than a first threshold. In this case, when a new terminal device performs an access from an edge-side device Edge2, the scheduling system re-selects a scheduling path for the terminal-side device, to be specific, the edge-side device Edge2 directly accesses a cloud side from an edge-side device Edge1, to ensure that bandwidths of an original terminal-side device User C and a newly accessed terminal device User D meet a requirement of quality of experience QoE of a user.

In a possible implementation, when the QoS data indicates that predicted bandwidths of the different media services are different, the data transmission system adjusts, based on the scheduling information, transmission paths of unified data streams corresponding to the different media services. Specifically, the different media services include a first service and a second service. When the QoS data indicates that a predicted bandwidth of a unified data stream corresponding to the first service on a third link is greater than a second threshold, the data transmission system adjusts, based on the scheduling information, a transmission path of a unified data stream corresponding to the second service from the third link to a fourth link, where the third link and the fourth link are different transmission links.

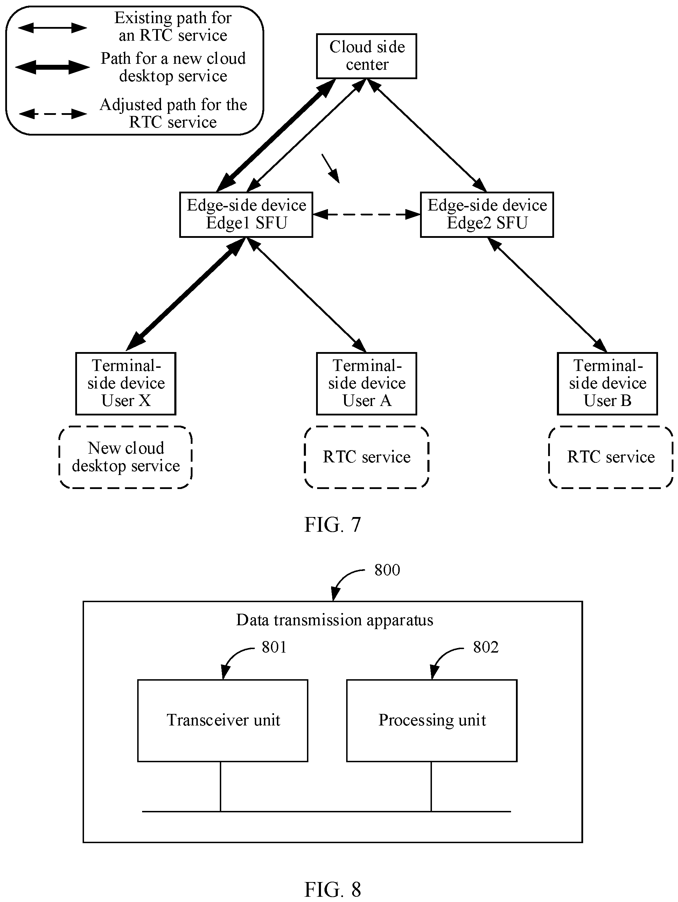

FIG. 7 is a diagram of adjusting transmission paths of unified data streams of different media services by a data transmission system based on scheduling information according to an embodiment of this application. In an example shown in FIG. 7, a cloud desktop service and an RTC service run in a same data transmission system at the same time. A basic bandwidth requirement of the RTC service is less than 10 Mbps, and a delay requirement is within 300 ms. A basic bandwidth requirement of the cloud desktop service is 25 Mbps, a burst peak bandwidth even reaches 50 Mbps, and a delay requirement is within 200 ms.

In the example shown in FIG. 7, a terminal-side device User A that performs the RTC service is served by an edge-side device Edge1 of the data transmission system. When a terminal-side device User X of a cloud desktop service newly accesses the edge-side device Edge1, a universal transport module reports QoS data to a scheduling system, including a transmission bandwidth and a bit rate feature required by the new cloud desktop service. Then the scheduling system evaluates a current available bandwidth of a link from a central cloud side to the edge-side device Edge1 and a bandwidth requirement of the existing service, and generates scheduling information based on transmission quality of the link and the like. The data transmission system performs a switch operation on a scheduling path of the existing RTC service based on the scheduling information, to be specific, switches the link that is of a unified data stream corresponding to the RTC service and that is from the central cloud side to the edge-side device Edge1 to a link from the edge-side device Edge1 to an edge-side device Edge2.

It can be learned from the foregoing embodiments that, in this embodiment of this application, the data transmission system can transmit various types of data by using the unified data stream, generate the scheduling information based on the quality of service QoS data of the unified data stream, and flexibly adjust transmission bandwidths of the various types of data and plan the transmission path of the unified data stream based on the scheduling information, so that bandwidth utilization of the data transmission system is improved.

The data transmission method provided in this embodiment of this application is described above. A data transmission apparatus provided in an embodiment of this application is described below with reference to the accompanying drawings.

FIG. 8 is a diagram of a structure of a data apparatus according to an embodiment of this application. The apparatus is configured to implement steps performed by the terminal-side device or the cloud-side device in the foregoing embodiments. As shown in FIG. 8, the data transmission apparatus 800 includes a transceiver unit 801 and a processing unit 802.

In an embodiment provided in embodiments of this application, the apparatus is configured to implement steps performed by the cloud-side device in the foregoing embodiments.

The transceiver unit 801 is configured to obtain quality of service QoS data of a unified data stream of one or more media services, where the unified data stream includes at least two types of the following data packets: an audio data packet, a video data packet, and a media signaling data packet. The processing unit 802 is configured to generate scheduling information based on the QoS data, where the scheduling information indicates a bandwidth for transmitting each type of data packet in the unified data stream and a path of the unified data stream. The processing unit 802 is further configured to transmit the unified data stream based on the scheduling information.

In a possible implementation, the QoS data includes QoS data for data transmission between a terminal side and an edge side.

In a possible implementation, the QoS data includes one or more of the following data: congestion control data, weak network resistance policy data, and traffic control data, the congestion control data includes a maximum estimated bandwidth, the weak network resistance policy data includes a retransmitted data packet proportion and a redundant data packet proportion of the same data stream, and the traffic control data includes a bit rate feature and an effective bit rate proportion of the unified data stream.

In a possible implementation, each data packet in the unified data stream carries a label, the label indicates stream attribute information of each data packet in the unified data stream, and the stream attribute information includes priority information, type information, and transmission attribute information of the different types of data packets.

In a possible implementation, the processing unit 802 is specifically configured to adjust a transmission bandwidth of each type of data in the unified data stream based on the scheduling information.

In a possible implementation, the processing unit 802 is specifically configured to: when the QoS data indicates that a predicted available bandwidth of the unified data stream on a first link is less than a first threshold, adjust a transmission path of the unified data stream to a second link based on the scheduling information, where the first link and the second link are different transmission links.

In a possible implementation, the processing unit 802 is specifically configured to: when the QoS data indicates that predicted bandwidths of different media services are different, adjust, based on the scheduling information, transmission paths of unified data streams corresponding to the different media services.

In a possible implementation, the media service includes one or more of the following: a real time communication service, a cloud desktop service, a cloud desktop design service, and a cloud gaming service.

In a possible implementation, the different media services include a first service and a second service. The processing unit 802 is specifically configured to: when the QoS data indicates that a predicted bandwidth of a unified data stream corresponding to the first service on a third link is greater than a second threshold, adjust, based on the scheduling information, a transmission path of a unified data stream corresponding to the second service from the third link to a fourth link, where the third link and the fourth link are different transmission links.

In a possible implementation, the first service includes a cloud desktop service, and the second service includes a real time communication service.

In another embodiment provided in embodiments of this application, the apparatus is configured to implement steps performed by the terminal-side device in the foregoing embodiments.

The transceiver unit 801 is configured to receive different types of data streams from an application, where the different types of data streams include an audio stream, a video stream, and a media signaling stream. The processing unit 802 is configured to perform unified processing on the different types of data streams based on stream attribute information to generate a unified data stream, where the stream attribute information includes priorities, types, and transmission attributes of the different types of data streams. The processing unit 802 is further configured to send the unified data stream based on scheduling information, where the scheduling information indicates a bandwidth for transmitting each type of data packet in the unified data stream and a path of the unified data stream.

In a possible implementation, each data packet in the unified data stream carries a label, and the label indicates stream attribute information of each data packet in the unified data stream.

In a possible implementation, the transceiver unit 801 is further configured to: obtain quality of service QoS data of a unified data stream of one or more media services, where the QoS data is used for generating the scheduling information. The processing unit 802 is further configured to send the QoS data to the cloud-side device through an application programming interface of a scheduling system.

In a possible implementation, the QoS data includes one or more of the following data: congestion control data, weak network resistance policy data, and traffic control data, the congestion control data includes a maximum estimated bandwidth, the weak network resistance policy data includes a retransmitted data packet proportion and a redundant data packet proportion of the same data stream, and the traffic control data includes a bit rate feature and an effective bit rate proportion of the unified data stream.

It should be understood that division of the units in the foregoing apparatus is merely logical function division. During actual implementation, all or some of the units may be integrated into one physical entity, or may be physically separated. In addition, all of the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. During implementation, steps in the foregoing methods or the foregoing units may be implemented by using a hardware integrated logic circuit in a processor element, or may be implemented in a form of software invoked by the processing element.

It should be noted that, for brief description, the foregoing method embodiment is described as a series of action combinations. However, a person skilled in the art should know that this application is not limited to an order of described actions. In addition, a person skilled in the art should also know that embodiments described in this specification are all preferred embodiments, and the related actions are not necessarily required in this application.

Another appropriate step combination that can be figured out by a person skilled in the art based on the content described above also falls within the protection scope of this application. In addition, a person skilled in the art should also be familiar to that embodiments described in this specification are all preferred embodiments, and the related actions are not necessarily required in this application.

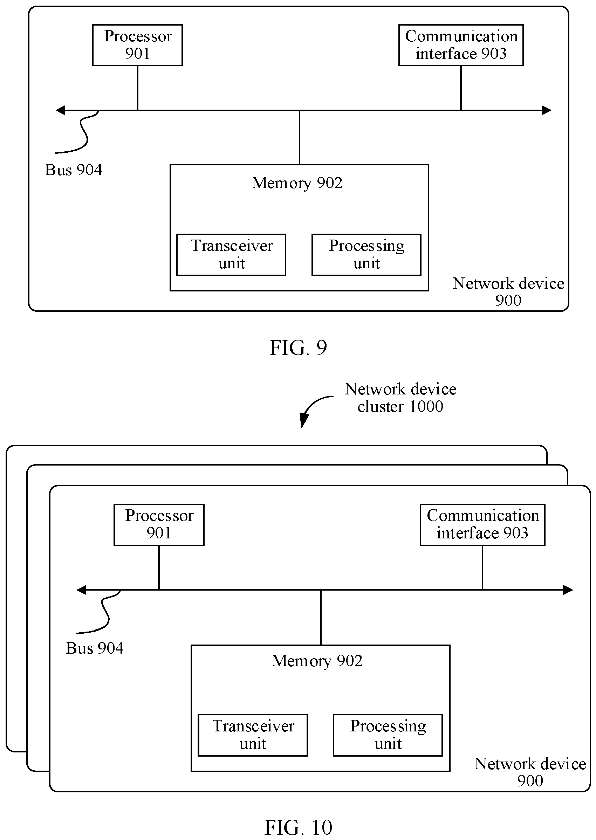

FIG. 9 is a diagram of a structure of a network device according to an embodiment of this application. As shown in FIG. 9, the network device 900 includes a processor 901, a memory 902, a communication interface 903, and a bus 904. The processor 901, the memory 902, and the communication interface 903 are coupled by using the bus (not shown). The memory 902 stores instructions. When the execution instructions in the memory 902 is executed, the network device 900 performs the method performed by the terminal-side device, the edge-side device, or the cloud-side device in the data transmission system in the foregoing method embodiment.

The network device 900 may be one or more integrated circuits configured to implement the foregoing method, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of the integrated circuit forms. For another example, when units in an apparatus may be implemented in a form of scheduling a program by a processing element, the processing element may be a general-purpose processor, for example, a central processing unit (central processing unit, CPU) or another processor that may invoke the program. For another example, the units may be integrated and implemented in a form of a system-on-a-chip (system-on-a-chip, SoC).

The processor 901 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The memory 902 may be a volatile memory or a non-volatile memory, or may include both volatile and non-volatile memories. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. By way of example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The communication interface 903 uses a transceiver module, for example, but not limited to, a network interface card or a transceiver, to implement communication between the network device 900 and another device or a communication network.

In addition to a data bus, the bus 904 may further include a power bus, a control bus, a status signal bus, and the like. The bus may be a peripheral component interconnect express (peripheral component interconnect express, PCIe) bus, an extended industry standard architecture (extended industry standard architecture, EISA) bus, a unified bus (unified bus, Ubus, or UB), a compute express link (compute express link, CXL), a cache coherent interconnect for accelerators (cache coherent interconnect for accelerators, CCIX), or the like. The bus may include an address bus, a data bus, a control bus, and the like.

FIG. 10 is a diagram of a network device cluster according to an embodiment of this application. As shown in FIG. 10, the network device cluster 1000 includes at least one network device 900. The network device 900 may be a server, for example, a central server, an edge server, or a local server in a local data center. In some embodiments, the network device 900 may alternatively be a terminal device, for example, a desktop computer, a notebook computer, or a smartphone.

As shown in FIG. 10, the network device cluster 1000 includes at least one network device 900. A memory 902 in the one or more network devices 900 in the network device cluster 1000 may store same instructions used for performing the foregoing data transmission method.

In some possible implementations, the memory 902 of the one or more network devices 900 in the network device cluster 1000 may alternatively separately store some instructions used for performing the foregoing data transmission method. In other words, a combination of the one or more network devices 900 may jointly execute instructions used for performing the foregoing data transmission method.

It should be noted that, memories 902 in different network devices 900 in the network device cluster 1000 may store different instructions respectively used for performing some functions of the foregoing data transmission apparatus. In other words, instructions stored in memories 902 in different network devices 900 may implement functions of one or more modules in a transceiver unit and a processing unit.

In some possible implementations, the one or more network devices 900 in the network device cluster 1000 may be connected via a network. The network may be a wide area network, a local area network, or the like.

In another embodiment of this application, a computer-readable storage medium is further provided, and the computer-readable storage medium stores computer-executable instructions. When a processor of a device executes the computer-executable instructions, the device performs the method performed by the terminal-side device, the edge-side device, or the cloud-side device in the data transmission system in the foregoing method embodiment.

In another embodiment of this application, a computer program product is further provided. The computer program product includes computer-executable instructions, and the computer-executable instructions are stored in a computer-readable storage medium. When a processor of a device executes the computer-executable instructions, the device performs the method performed by the terminal-side device, the edge-side device, or the cloud-side device in the data transmission system in the foregoing method embodiment.

A person skilled in the art may clearly understand that for convenience and conciseness of description, for a specific working process of the foregoing system, apparatus, and unit, reference may be made to a corresponding process in the foregoing method embodiment, and details are not described herein again.

In the several embodiments provided in this application, it should be understood that the disclosed system, apparatus, and method may be implemented in other manners. For example, the described apparatus embodiment is merely an example. For example, division of the units is merely logical function division and there may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The units described as separate components may or may not be physically separate, and components displayed as units may or may not be physical units, may be located in one position, or may be distributed on a plurality of network units. Some or all of the units may be selected based on actual requirements to achieve the objectives of the solution of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in a form of the software functional unit and sold or used as an independent product, the integrated unit may be stored in a computer-readable storage medium. Based on such an understanding, the technical solution of this application essentially, or the part contributing to conventional technologies, or all or some of the technical solution may be implemented in a form of a software product. The computer software product is stored in a storage medium and includes several instructions for instructing a computer device (which may be a personal computer, a server, or a network device) to perform all or some of steps of the method described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A data transmission method, wherein the method is applied to a cloud management platform, the cloud management platform is configured to manage one or more media services, and the method comprises:
obtaining quality of service QoS data of a unified data stream of the one or more media services, wherein the unified data stream comprises at least two types of the following data packets: an audio data packet, a video data packet, and a media signaling data packet;
generating scheduling information based on the QoS data, wherein the scheduling information indicates a bandwidth for transmitting each type of data packet in the unified data stream and a path of the unified data stream; and
transmitting the unified data stream based on the scheduling information.

2. The method according to claim 1, wherein the QoS data comprises one or more of the following: congestion control data, weak network resistance policy data, and traffic control data, the congestion control data comprises a maximum estimated bandwidth, the weak network resistance policy data comprises a retransmitted data packet proportion and a redundant data packet proportion of the same data stream, and the traffic control data comprises a bit rate feature and an effective bit rate proportion of the unified data stream.

3. The method according to claim 2, wherein the QoS data comprises: QoS data for data transmission between a terminal side and an edge side.

4. The method according to any one of claims 1 to 3, wherein each data packet in the unified data stream carries a label, the label indicates stream attribute information of each data packet in the unified data stream, and the stream attribute information comprises priorities, types, and transmission attributes of the different types of data packets.

5. The method according to any one of claims 1 to 4, wherein the transmitting the unified data stream based on the scheduling information comprises:
adjusting a transmission bandwidth of each type of data packet in the unified data stream based on the scheduling information.

6. The method according to any one of claims 1 to 5, wherein the transmitting the unified data stream based on the scheduling information comprises:
when the QoS data indicates that a predicted available bandwidth of the unified data stream on a first link is less than a first threshold, adjusting a transmission path of the unified data stream to a second link based on the scheduling information, wherein the first link and the second link are different transmission links.

7. The method according to any one of claims 1 to 6, wherein the transmitting the unified data stream based on the scheduling information comprises:
when the QoS data indicates that predicted bandwidths of different media services are different, adjusting, based on the scheduling information, transmission paths of unified data streams corresponding to the different media services.

8. The method according to claim 7, wherein the different media services comprise a first service and a second service, and the transmitting the unified data stream based on the scheduling information comprises:
when the QoS data indicates that a predicted bandwidth of a unified data stream corresponding to the first service on a third link is greater than a second threshold, adjusting, based on the scheduling information, a transmission path of a unified data stream corresponding to the second service from the third link to a fourth link, wherein the third link and the fourth link are different transmission links.

9. The method according to any one of claims 1 to 7, wherein the media service comprises one or more of a real time communication service, a cloud desktop service, a cloud desktop design service, and a cloud gaming service.

10. A data transmission method, comprising:
receiving different types of data streams from an application, wherein the different types of data streams comprise an audio stream, a video stream, and a media signaling stream;
performing unified processing on the different types of data streams based on stream attribute information to generate a unified data stream, wherein the stream attribute information comprises priorities, types, and transmission attributes of the different types of data streams; and
sending the unified data stream based on scheduling information, wherein the scheduling information indicates a bandwidth for transmitting each type of data packet in the unified data stream and a path of the unified data stream.

11. The method according to claim 10, wherein each data packet in the unified data stream carries a label, and the label indicates stream attribute information of each data packet in the unified data stream.

12. The method according to claim 10 or 11, wherein the method further comprises:
obtaining quality of service QoS data of the unified data stream, wherein the QoS data is used for generating the scheduling information; and
sending the QoS data to a cloud-side device through an application programming interface of a scheduling system.

13. The method according to claim 12, wherein the QoS data comprises one or more of the following: congestion control data, weak network resistance policy data, and traffic control data, the congestion control data comprises a maximum estimated bandwidth, the weak network resistance policy data comprises a retransmitted data packet proportion and a redundant data packet proportion of the same data stream, and the traffic control data comprises a bit rate feature and an effective bit rate proportion of the unified data stream.

14. A data transmission method, applied to a universal transport system, wherein the universal transport system is deployed on a cloud-side device, an edge-side device, and a terminal-side device, and the method comprises:
obtaining, by the cloud-side device, quality of service QoS data of a unified data stream of one or more media services, wherein the unified data stream comprises at least two types of the following data packets: an audio data packet, a video data packet, and a media signaling data packet;
generating, by the cloud-side device, scheduling information based on the QoS data, wherein the scheduling information indicates a bandwidth for transmitting each type of data packet in the unified data stream and a path of the unified data stream;
separately sending, by the cloud-side device, the scheduling information to the edge-side device and the terminal-side device; and
transmitting, by the universal transport system, the unified data stream based on the scheduling information.

15. The method according to claim 14, wherein the QoS data comprises one or more of the following data: congestion control data, weak network resistance policy data, and traffic control data, the congestion control data comprises a maximum estimated bandwidth, the weak network resistance policy data comprises a retransmitted data packet proportion and a redundant data packet proportion of the same data stream, and the traffic control data comprises a bit rate feature and an effective bit rate proportion of the unified data stream.

16. The method according to claim 14 or 15, wherein the QoS data comprises: QoS data for data transmission between a terminal side and an edge side.

17. The method according to any one of claims 14 to 16, wherein the method further comprises:
receiving, by the terminal-side device, different types of data streams from an application, wherein the different types of data streams comprise an audio stream, a video stream, and a media signaling stream;
performing, by the terminal-side device, unified processing on the different types of data streams based on stream attribute information to generate the unified data stream, wherein the stream attribute information comprises priorities, types, and transmission attributes of the different types of data streams; and
sending, by the terminal-side device, the unified data stream to the edge-side device based on the scheduling information.

18. The method according to claim 17, wherein each data packet in the unified data stream carries a label, and the label indicates stream attribute information of each data packet in the unified data stream.

19. The method according to any one of claims 14 to 18, wherein the transmitting, by the universal transport system, the unified data stream based on the scheduling information comprises:
adjusting, by the universal transport system, a transmission bandwidth of each type of data in the unified data stream based on the scheduling information.

20. The method according to any one of claims 14 to 19, wherein the transmitting, by the universal transport system, the unified data stream based on the scheduling information comprises:
when the QoS data indicates that a predicted available bandwidth of the unified data stream on a first link is less than a first threshold, adjusting, by the edge-side device, a transmission path of the unified data stream from a first path to a second link based on the scheduling information, wherein the first link and the second link are different transmission links.

21. The method according to any one of claims 14 to 20, wherein the transmitting, by the universal transport system, the unified data stream based on the scheduling information comprises:
when the QoS data indicates that predicted bandwidths of different media services are different, adjusting, based on the scheduling information, transmission paths of unified data streams corresponding to the different media services.

22. The method according to claim 21, wherein the different media services comprise a first service and a second service, and the transmitting, by the universal transport system, the unified data stream based on the scheduling information comprises:
when the QoS data indicates that a predicted bandwidth of a unified data stream corresponding to the first service on a third link is greater than a second threshold, adjusting, by the edge-side device based on the scheduling information, a transmission path of a unified data stream corresponding to the second service from the third link to a fourth link, wherein the third link and the fourth link are different data transmission links.

23. The method according to any one of claims 14 to 22, wherein the media service comprises one or more of a real time communication service, a cloud desktop service, a cloud desktop design service, and a cloud gaming service.

24. A cloud-side data transmission apparatus, comprising:
a transceiver unit, configured to obtain quality of service QoS data of a unified data stream of one or more media services, wherein the unified data stream comprises at least two types of the following data packets: an audio data packet, a video data packet, and a media signaling data packet; and
a processing unit, configured to generate scheduling information based on the QoS data, wherein the scheduling information indicates a bandwidth for transmitting each type of data packet in the unified data stream and a path of the unified data stream, wherein
the processing unit is further configured to transmit the unified data stream based on the scheduling information.

25. The apparatus according to claim 24, wherein the QoS data comprises one or more of the following: congestion control data, weak network resistance policy data, and traffic control data, the congestion control data comprises a maximum estimated bandwidth, the weak network resistance policy data comprises a retransmitted data packet proportion and a redundant data packet proportion of the same data stream, and the traffic control data comprises a bit rate feature and an effective bit rate proportion of the unified data stream.

26. The apparatus according to claim 24 or 25, wherein the QoS data comprises: QoS data for data transmission between a terminal side and an edge side.

27. The apparatus according to any one of claims 24 to 26, wherein each data packet in the unified data stream carries a label, the label indicates stream attribute information of each data packet in the unified data stream, and the stream attribute information comprises priorities, types, and transmission attributes of the different types of data packets.

28. The apparatus according to any one of claims 24 to 27, wherein the processing unit is specifically configured to adjust a transmission bandwidth of each type of data packet in the unified data stream based on the scheduling information.

29. The apparatus according to any one of claims 24 to 28, wherein the processing unit is specifically configured to:
when the QoS data indicates that a predicted available bandwidth of the unified data stream on a first link is less than a first threshold, adjust a transmission path of the unified data stream to a second link based on the scheduling information, wherein the first link and the second link are different transmission links.

30. The apparatus according to any one of claims 24 to 29, wherein the processing unit is specifically configured to:
when the QoS data indicates that predicted bandwidths of different media services are different, adjust, based on the scheduling information, transmission paths of unified data streams corresponding to the different media services.

31. The apparatus according to claim 30, wherein the different media services comprise a first service and a second service, and the processing unit is specifically configured to:
when the QoS data indicates that a predicted bandwidth of a unified data stream corresponding to the first service on a third link is greater than a second threshold, adjust, based on the scheduling information, a transmission path of a unified data stream corresponding to the second service from the third link to a fourth link, wherein the third link and the fourth link are different transmission links.

32. The apparatus according to any one of claims 24 to 31, wherein the media service comprises one or more of a real time communication service, a cloud desktop service, a cloud desktop design service, and a cloud gaming service.

33. A terminal-side data transmission apparatus, comprising:
a transceiver unit, configured to receive different types of data streams from an application, wherein the different types of data streams comprise an audio stream, a video stream, and a media signaling stream; and
a processing unit, configured to perform unified processing on the different types of data streams based on stream attribute information to generate a unified data stream, wherein the stream attribute information comprises priorities, types, and transmission attributes of the different types of data streams, wherein
the processing unit is further configured to send the unified data stream based on scheduling information, wherein the scheduling information indicates a bandwidth for transmitting each type of data packet in the unified data stream and a path of the unified data stream.

34. The apparatus according to claim 33, wherein each data packet in the unified data stream carries a label, and the label indicates stream attribute information of each data packet in the unified data stream.

35. The apparatus according to claim 33 or 34, wherein the transceiver unit is further configured to:
obtain quality of service QoS data of the unified data stream, wherein the QoS data is used for generating the scheduling information; and
the processing unit is further configured to send the QoS data to a cloud-side device through an application programming interface of a scheduling system.

36. The apparatus according to claim 35, wherein the QoS data comprises one or more of the following data: congestion control data, weak network resistance policy data, and traffic control data, the congestion control data comprises a maximum estimated bandwidth, the weak network resistance policy data comprises a retransmitted data packet proportion and a redundant data packet proportion of the same data stream, and the traffic control data comprises a bit rate feature and an effective bit rate proportion of the unified data stream.

37. A data transmission system, comprising a cloud-side device, an edge-side device, and a terminal-side device, wherein
the cloud-side device is configured to obtain quality of service QoS data of a unified data stream of one or more media services, wherein the unified data stream comprises at least two types of the following data packets: an audio data packet, a video data packet, and a media signaling data packet;
the cloud-side device is further configured to generate scheduling information based on the QoS data, wherein the scheduling information indicates a bandwidth for transmitting each type of data packet in the unified data stream and a path of the unified data stream;
the cloud-side device is further configured to separately send the scheduling information to the edge-side device and the terminal-side device; and
the data transmission system is configured to transmit the unified data stream based on the scheduling information.

38. The system according to claim 37, wherein the QoS data comprises one or more of the following data: congestion control data, weak network resistance policy data, and traffic control data, the congestion control data comprises a maximum estimated bandwidth, the weak network resistance policy data comprises a retransmitted data packet proportion and a redundant data packet proportion of the same data stream, and the traffic control data comprises a bit rate feature and an effective bit rate proportion of the unified data stream.

39. The system according to claim 37 or 38, wherein the QoS data comprises: QoS data for data transmission between a terminal side and an edge side.

40. The system according to any one of claims 37 to 39, wherein
the terminal-side device is configured to receive different types of data streams from an application, wherein the different types of data streams comprise an audio stream, a video stream, and a media signaling stream;
the terminal-side device is configured to perform unified processing on the different types of data streams based on stream attribute information to generate the unified data stream, wherein the stream attribute information comprises priorities, types, and transmission attributes of the different types of data streams; and
the terminal-side device is configured to send the unified data stream to the edge-side device based on scheduling information.

41. The system according to claim 40, wherein each data packet in the unified data stream carries a label, and the label indicates stream attribute information of each data packet in the unified data stream.

42. The system according to any one of claims 37 to 41, wherein the data transmission system is specifically configured to:
adjust a transmission bandwidth of each type of data packet in the unified data stream based on the scheduling information.

43. The system according to any one of claims 37 to 42, wherein the data transmission system is specifically configured to:
when the QoS data indicates that a predicted available bandwidth of the unified data stream on a first link is less than a first threshold, adjust a transmission path of the unified data stream from a first path to a second link based on the scheduling information, wherein the first link and the second link are different transmission links.

44. The system according to any one of claims 37 to 43, wherein the data transmission system is specifically configured to:
when the QoS data indicates that predicted bandwidths of different media services are different, adjust, based on the scheduling information, transmission paths of unified data streams corresponding to the different media services.

45. The system according to claim 44, wherein the different media services comprise a first service and a second service, and the data transmission system is specifically configured to:
when the QoS data indicates that a predicted bandwidth of a unified data stream corresponding to the first service on a third link is greater than a second threshold, adjust, based on the scheduling information, a transmission path of a unified data stream corresponding to the second service from the third link to a fourth link, wherein the third link and the fourth link are different data transmission links.

46. The system according to any one of claims 37 to 45, wherein the media service comprises one or more of a real time communication service, a cloud desktop service, a cloud desktop design service, and a cloud gaming service.

47. A network device, comprising a processor, wherein the processor is coupled to a memory, the processor is configured to store instructions, and when the instructions are executed by the processor, the network device is enabled to perform the method according to any one of claims 1 to 9, or the network device is enabled to perform the method according to any one of claims 10 to 13.

48. A computer-readable storage medium, wherein the computer-readable storage medium stores instructions, and when the instructions are executed, a computer is enabled to perform the method according to any one of claims 1 to 9, or the computer is enabled to perform the method according to any one of claims 10 to 13.

49. A computer program product, wherein the computer program product comprises instructions, and when the instructions are executed, a computer is enabled to implement the method according to any one of claims 1 to 9, or the computer is enabled to implement the method according to any one of claims 10 to 13.
